# EUROPEAN PATENT APPLICATION

(11) **EP 4 660 838 A1**
(43) Date of publication of application: **10.12.2025**
(21) Application number: 24863830.6
(22) Date of filing: 23.04.2024
(51) Int. Cl.: G06F 16/3329

(54) **INTERACTION METHOD AND APPARATUS, ELECTRONIC DEVICE, STORAGE MEDIUM AND PRODUCT**

(71) Applicant: Beijing Zitiao Network Technology Co., Ltd., Beijing 100190 (CN)
(72) Inventor: XIA, Liang, Beijing 100028 (CN); ZHENG, Ziyang, Beijing 100028 (CN); WANG, Daoyu, Beijing 100028 (CN)
(74) Representative: Isarpatent
(86) International application number: PCT/CN2024/089318
(87) International publication number: WO 2025/222374

(57) **Abstract**

The present disclosure relates to an interaction method and device, an electronic device, a storage medium and a product, and relates to the field of terminal technology. The interaction method includes: displaying multimedia content in a playing interface; determining an object to be called based on the multimedia content; displaying, in response to the object to be called being an agent, a message sent from the agent through a message control in the playing interface, wherein the message is obtained by understanding the multimedia content; and displaying a conversation interface between the user and the agent in response to a trigger operation of the user on the message control.

## Description

### TECHNICAL FIELD

The present disclosure relates to the field of terminal technology, in particular to an interaction method and device, an electronic device, a storage medium and a product.

### BACKGROUND

In a multimedia application such as a short video application, the user may browse multimedia content such as video and image-text content, and may switch between a plurality of multimedia contents by an operation such as switching. For example, if the user is not interested in the current multimedia content, it is possible to rapidly switch to a next recommended video. If the user is interested in the current multimedia content, it is possible to interact with an author of the multimedia content by posting comments and likes in the comment area, so as to express feelings or learn about more information related to the video.

### SUMMARY

The summary of this invention is provided to introduce concepts in a concise form, which will be described in detail in the following detailed description. The summary of this invention is neither intended to identify the key features or essential features of the technical solution for which protection is sought, nor intended to limit the scope of the technical solution for which protection is sought.

According to some embodiments of the present disclosure, an interaction method is provided. The interaction method includes: displaying multimedia content in a playing interface; determining an object to be called based on the multimedia content; displaying, in response to the object to be called being an agent, a message sent from the agent through a message control in the playing interface, wherein the message is obtained by understanding the multimedia content; and displaying a conversation interface between the user and the agent in response to a trigger operation of the user on the message control.

According to other embodiments of the present disclosure, an interaction device is provided. The interaction device includes: a first display module configured for displaying multimedia content in a playing interface; a determining module configured for determining an object to be called based on the multimedia content; a second display module configured for displaying, in response to the object to be called being an agent, a message sent from the agent through a message control in the playing interface, wherein the message is obtained by understanding the multimedia content; and a third display module configured for displaying a conversation interface between the user and the agent in response to a trigger operation of the user on the message control.

According to some embodiments of the present disclosure, an electronic device is provided. The electronic device includes: a memory; and a processor coupled to the memory, wherein the processor is configured to perform the interaction method according to any embodiment of the present disclosure based on instructions stored in the memory.

According to some embodiments of the present disclosure, a computer-readable storage medium is provided. The computer-readable storage medium has a computer program stored thereon that, when executed by a processor, performs the interaction method according to any of the embodiments in the present disclosure.

According to some embodiments of the present disclosure, a computer program product is provided. The computer program product that, when run on a computer, causes the computer to implement the interaction method according to any of the embodiments in the present disclosure.

According to some embodiments of the present disclosure, a computer program is provided. The computer program includes: instructions that, when executed by a processor, cause the processor to perform the interaction method according to any of the embodiments in the present disclosure.

Other features, aspects and advantages of the present disclosure will become apparent from the following detailed description of exemplary embodiments of the present disclosure with reference to the accompanying drawings.

### BRIEF DESCRIPTION OF THE DRAWINGS

Hereinafter, preferred embodiments of the present disclosure will be described with reference to the accompanying drawings. The accompanying drawings described herein are used to provide a further understanding of the present disclosure, and each of the accompanying drawings together with the following detailed description is included in this specification and forms a part of this specification to explain the present disclosure. It should be understood that, the accompanying drawings in the following description only relate to some embodiments of the present disclosure, but do not constitute a limitation to the present disclosure. In the accompanying drawings:
Fig. 1 shows a schematic flow chart of an interaction method according to some embodiments of the present disclosure.
Figs. 2A and 2B show schematic views of a playing interface according to some embodiments of the present disclosure.
Fig. 3 shows a schematic flow chart of a method for determining an object to be called according to some embodiments of the present disclosure.
Fig. 4 shows a schematic flow chart of a message generation method according to some embodiments of the present disclosure.
Fig. 5 shows a schematic flow chart of an interaction method according to other embodiments of the present disclosure.
Fig. 6 shows a schematic structural view of an interaction device according to some embodiments of the present disclosure.
Fig. 7 shows a schematic structural view of an electronic device according to some embodiments of the present disclosure.
Fig. 8 shows a schematic structural view of a computer system according to some embodiments of the present disclosure.

It should be understood that, for ease of description, the sizes of various parts shown in the accompanying drawings are not necessarily drawn according to actual proportional relationships. The same or similar reference numerals are used in various accompanying drawings to denote the same or similar components. Therefore, once an item is defined in one accompanying drawing, it might not be discussed further in subsequent accompanying drawings.

### DETAILED DESCRIPTION

The technical solutions in the embodiments of the present disclosure will be explicitly and completely described below in conjunction with the accompanying drawings in the embodiments of the present disclosure. However, apparently, the embodiments described are merely some of the embodiments of the present disclosure, rather than all of the embodiments. The following description of the embodiments is actually only illustrative, and by no means serves as any limitation to the present disclosure and its application or use. It should be understood that the present disclosure may be implemented in various forms, and should not be construed as being limited to the embodiments set forth herein.

It should be understood that the various steps recited in the method embodiments of the present disclosure may be performed according to different sequences, and/or performed in parallel. In addition, the method embodiments may include additional steps and/or omit to perform the illustrated steps. The scope of the present disclosure is not limited in this respect. Unless specifically stated otherwise, the relative arrangement of components and steps, the numerical expressions, and the values set forth in these embodiments should be construed as merely exemplary, but do not limit the scope of the present disclosure.

The term "comprising" and its variations used in the present disclosure represent an open term that comprises at least the following elements/features but does not exclude other elements/features, that is, "comprising but not limited to". In addition, the term "including" and its variations used in the present disclosure represent an open term that includes at least the following elements/features, but does not exclude other elements/features, that is, "including but not limited to". Therefore, comprising and including are synonymous. The term "based on" means "at least partially based on".

The term "an embodiment", "some embodiments" or "embodiment" throughout the specification means that a specific feature, structure, or characteristic described in combination with the embodiment(s) is included in at least one embodiment of the present invention. For example, the term "an embodiment" means "at least one embodiment"; the term "another embodiment" means "at least one additional embodiment"; and the term "some embodiments" means "at least some embodiments". Moreover, the presences of the phrases "in an embodiment", "in some embodiments" or "in embodiments" in various places throughout the specification do not necessarily all refer to the same embodiment, but may also refer to the same embodiment.

It should be noted that the concepts such as "first" and "second" mentioned in the present disclosure are only used to distinguish different devices, modules or units, but not to limit the order or interdependence of functions performed by these devices, modules or units. Unless otherwise specified, the concepts such as "first" and "second" are not intended to imply that the objects thus described have to follow a given order in terms of time, space and ranking, or a given order in any other manner.

It should be noted that the modifications of "one" and "a plurality of" mentioned in the present disclosure are illustrative rather than restrictive, and those skilled in the art should understand that they should be understood as "one or more" unless contextually specified otherwise.

The names of messages or information exchanged between multiple devices in the embodiments of the present disclosure are only used for illustrative purposes, but not for limiting the scope of these messages or information.

The embodiments of the present disclosure will be described in detail below in conjunction with the accompanying drawings, but the present disclosure is not limited to these specific embodiments. The following specific embodiments may be combined with each other, and the same or similar concepts or processes will not be described in detail in some embodiments. In addition, in one or more embodiments, specific features, structures, or characteristics may be combined by those of ordinary skill in the art in any suitable manner that will be apparent from the present disclosure.

It should be understood that the present disclosure also does not limit how to obtain the image to be applied/processed. In an embodiment of the present disclosure, it may be obtained from a storage device, such as an internal memory or an external storage device. In another embodiment of the present disclosure, it is possible to perform shooting by deploying a photographing assembly. It should be noted that the obtained image may be a captured image, or may be a frame of image in a captured video, but is not particularly limited thereto.

In the context of the present disclosure, an image may refer to any of a plurality of images, such as color images and grayscale images. It should be noted that in the context of this specification, the type of image is not specifically limited. In addition, the image may be any suitable image, for example an original image obtained by a camera device, or an image that has been subjected to specific processing on the original image, such as preliminary filtering, anti-aliasing, color adjustment, contrast adjustment and normalization. It should be noted that the pre-processing operation may also include other types of pre-processing operations known in the art, which will not be described in detail here.

When the multimedia content is browsed, if the user is interested in the multimedia content, it is possible for the user to search for other information related thereto spontaneously, or it is possible for the user to leave a message to an author of the multimedia content for further understanding. However, these operations are required to be performed by the user initiatively. Moreover, some users are not skilled in operation, or less intended to perform search or interaction initiatively, which results in a relatively low information obtaining efficiency of the user.

The present disclosure provides an interaction method, which may display a message sent from an agent to a user during the process of displaying the multimedia content, wherein the message is generated based on the multimedia content. In this way, it is possible to automatically provide the user with the information related to the interaction multimedia content.

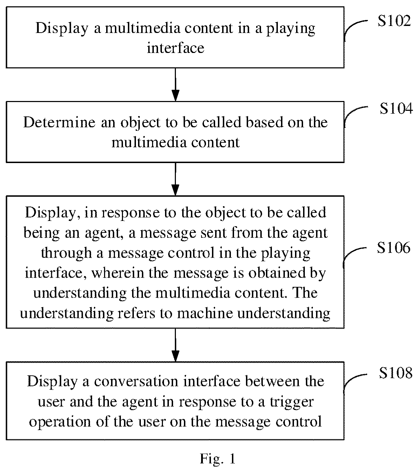

Fig. 1 shows a schematic flow chart of an interaction method according to some embodiments of the present disclosure. As shown in Fig. 1, the interaction method of this embodiment includes steps S102 to S108.

In step S102, a multimedia content is displayed in a playing interface.

The playing interface may include a display window of the multimedia content and a control, wherein the display window is configured to accommodate the multimedia content. The control may be located on an upper layer of the display window, or may be arranged side by side with the display window in the playing interface. The control includes, for example, an interaction control, such as likes, favorites, comments and forwards.

The user may control playing the multimedia content through a specified interaction gesture. For example, playing and pausing the multimedia content are controlled by a clicking operation on the multimedia content, switching the multimedia content is controlled by a longitudinal slide operation on the multimedia content, and different channels are switched by a latitudinal slide operation on the multimedia content. Of course, these operations may also be triggered by the controls in the playing interface, and those skilled in the art may select as required.

In some embodiments, the multimedia content is a content in a recommendation stream (feed) of multimedia content. A media stream (feed) refers to a stream for recommending multimedia content to the user based on a specified recommendation policy. The multimedia content in the media stream may be displayed in an immersive form, for example, full-screen display. The user may browse recommended videos sequentially through a switching operation of the multimedia content.

In step S104, an object to be called is determined based on the multimedia content.

The object to be called is function(s) provided by the application for the user, such as at least one of an agent or a sub-application.

The agent (intelligent agent) includes, for example, a robot, a digital human, a smart assistant, or a virtual agent of a machine learning model, and is an intelligent object capable of automatically replying based on content input by the user, for example, it may be a conversation robot. The agent may base on a conversation sent from other subjects (other users or other agents participating in a conversation) in a conversation scenario to generate a corresponding content. The agent may be implemented in a form of software, hardware or a combination of software and hardware. The agent may be realized by depending on a machine learning model, for example, realized based on a Large Language Model (referred to as LLM for short) or a Foundation Model. The machine learning model may be a generative model configured to output a target content based on the input information. The input information of the generative model includes a processing basis of the generative model during the generation process, for example, the information to which reference is made to perform a generation process and the requirements for the output target content. The generative model includes, for example, a model performing generating based on a text or a model performing generating based on an image, and the output of the generative model may include a text, an image or a combination thereof. Of course, the input or output of the generative model may also be data of other modalities, for example, audio, video or a combination of multiple types of data. The generative model may be a single-modality model, for example, a model for generating a text based on a text (referred to as "Text to Text Model" for short) and a model for generating an image based on an image (referred to as "Image to Image Model" for short). Alternatively, the generative model may also be a cross-modality modal, that is, a model of which the input and the output pertain to different modalities, for example, a model for generating an image based on a text (referred to as "Text to Image Model" for short). Alternatively, the input of the generative model may include a plurality of modalities, and the output may also include a plurality of modalities.

The sub-application is an object that is run based on a specified logic in an application, which includes an applet or a plug-in. Taking an applet as an example, it is possible to include a weather applet, a shorthand applet and a reading applet. Through a sub-application, it is possible to rapidly provide more functions to the user through a same application.

Based on the multimedia content, the object to be called that may be matched with the multimedia content is determined. For example, the object to be called may be determined by the machine understanding information of the multimedia content. The machine understanding information refers to the semantic information obtained based on processing by a computer. For example, the multimedia content may be processed by a machine learning model, and the object to be called matched with the multimedia content may be determined according to a processing result of the machine learning model.

In some embodiments, the multimedia content may be parsed to obtain the understanding information of the multimedia content (that is, the machine understanding information), and the object to be called may then be determined based on the understanding information. For example, when the candidate object includes an agent and a sub-application, it is possible to first determine whether to call an object of an agent type or an object of a sub-application type, and then further determine which object is called.

In some embodiments, at least one of image processing or audio processing is performed on the multimedia content to obtain at least one of the image semantic information or the audio semantic information of the multimedia content. The above-described image processing and audio processing may be completed by a machine learning model capable of supporting to process the multimedia data. Then, the understanding information of the multimedia content may be generated based on at least one of the image semantic information, the audio semantic information, a description text of the multimedia content, or a label of the multimedia content. For example, at least one of the image semantic information, the audio semantic information, the description text of the multimedia content or the label of the multimedia content are fused to generate a summary of the multimedia content as the understanding information. Alternatively, a keyword of the multimedia content is extracted as the understanding information from at least one of the image semantic information, the audio semantic information, the description text of the multimedia content or the label of the multimedia content. Alternatively, a type of the multimedia content may be determined as the understanding information according to a type involved in at least one of the image semantic information, the audio semantic information, the description text of the multimedia content or the label of the multimedia content.

In step S106, in response to the object to be called being an agent, a message sent from the agent through a message control is displayed in the playing interface, wherein the message is obtained by understanding the multimedia content. The understanding refers to machine understanding.

After an object to be called is determined, the message to be sent from the agent may be generated based on the multimedia content. For example, the message may be generated based on the understanding information of the multimedia content. In some embodiments, the understanding information is processed by using a machine learning model (for example, a "Text to Text Model") for processing a text, so as to obtain a text output by the machine learning model, and generate a message of the agent by using the text. In addition to including the understanding information, the processing object of the machine learning model for processing a text may further include the information of an agent (for example, setting information) and the information of the user authorized by the user (for example, a preference of the user), so as to make the generated message more matched with an interaction style between the agent and the user. For example, the agent of a life assistant type may send a message in a colloquial language, and the agent of an expertise knowledge type may express in a more prudent language.

The message control may only include the above-described message, and may also include an identification of the agent (for example, a name, an avatar or the like) and a message. The message control may float on an upper layer over the playing interface, and be displayed in response to message generation so as to carry a generated message. It is also possible to be fixedly displayed in the playing interface and displayed the message in the playing interface after message generation. In some embodiments, the message control may include a dialog box, an icon or a sheet.

In step S108, a conversation interface between the user and the agent is displayed in response to a trigger operation of the user on the message control.

After the message sent from the agent is obtained, the user may continue a conversation with the agent by triggering the message control. Of course, if the user is unwilling to continue to communicate with the agent, it is also possible not to trigger the message control. In some embodiments, in the case where the message control is not a fixed control in the playing interface, the message control may be closed in response to that the user does not trigger the message control and a display duration of the message control reaches a specified threshold, so that the user may continue to browse the multimedia content concentratedly. For example, the message control may be a pop-up window, and the pop-up window is closed in the case where the user does not trigger the pop-up window within a duration of a specified threshold.

In the above-described embodiments, during the process of playing the multimedia content for the user, it is possible to automatically push the information related to the multimedia content to the user by calling the agent based on the multimedia content and sending a message related to the multimedia content through the agent, so that the user further learns about the multimedia content more efficiently. Moreover, the user may also continue to interact with the agent conveniently to learn about more interesting information. Therefore, the embodiment of the present disclosure may improve the information obtaining efficiency during the process of browsing the multimedia content by the user.

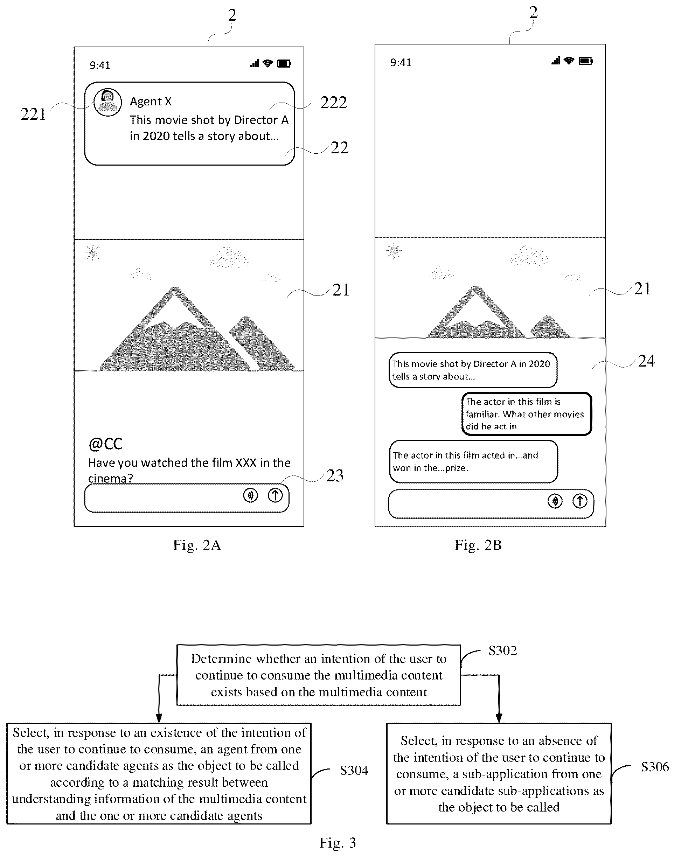

Figs. 2A and 2B show schematic views of a playing interface according to some embodiments of the present disclosure. As shown in Fig. 2A, a playing interface 2 of the multimedia content includes a displayed multimedia content 21, which is, for example, a clip of a certain film. In addition, there is also a message control 22 floating on an upper layer over the playing interface 2. The message control 22 includes an avatar 221 of an agent X and a message 222 "This movie shot by Director A in 2020 tells a story about...". The message 222 is obtained by machine understanding of the multimedia content. Therefore, the user may efficiently obtain the information related to the multimedia content that is currently browsed. The message control 22 may be embodied in other forms as required, for example, it may be an icon, and the content of the message may be further displayed after the icon is triggered. Alternatively, the message control may be a sheet, a dialog box and the like.

In some embodiments, the playing interface 2 may further include an input control 23, which may be a text input box, a voice input control and the like. The content input into the input control 23 is sent to the agent for processing. That is, the user may send a message to the agent through the input control 23. The agent may reply to the user according to the received message. For example, the message of the agent is generated according to the received message and the multimedia content that is currently played.

In response to a trigger operation on the message control 22 by the user, the playing interface 2 may be as shown in Fig. 2B. In Fig. 2B, on an upper layer over the multimedia content 21, a conversation interface 24 between the user and the agent is displayed, so that the conversation interface includes the content of a message that has been sent from the agent to the user (for example, the content of the message 222), and an input control 241. The user may continue to communicate with the agent by triggering the input control 241, for example, continuing to investigate into the relevant information about the multimedia content 21, or sending a message of other subjects to the agent.

The process of understanding the multimedia content to generate a message may be triggered automatically, or triggered in response to an instruction of the user. One or a combination of these two trigger strategies may be used. For example, it is possible to use one trigger method for all the multimedia contents, or to use an automatic trigger method for some multimedia contents and a manual trigger method for other multimedia contents.

In some embodiments, in response to displaying the multimedia content, the multimedia content is understood. That is, the understanding of the multimedia content can be started automatically without waiting for an instruction from the user. It is possible to use this strategy for all the multimedia contents, or use this strategy for part of the multimedia contents based on a label of the multimedia content as required. Taking Fig. 2A as an example, the message control 22 and the message 222 may be generated and displayed in response to displaying the multimedia content 21, so it is not necessary for the user to perform interacting actively.

In some embodiments, the message sent from the user to the agent is obtained through the input control, and the multimedia content is understood based on the instruction information in the message sent from the user. That is, it is possible to start understanding the multimedia content after an instruction by the user. For example, the user may send an instruction to the agent through the input control 23, for example, "Who directed this movie" and "What is the ending of this movie", so that it is possible to trigger understanding the multimedia content in response to an instruction sent from the user, and determine what message is sent to the user according to an instruction sent from the user. Therefore, it is possible to reduce the processing pressure of the system, and generate the content of the message more pertinently.

When it is determined what type of object is called, it may be determined based on whether the user is intended to continue to consume the multimedia content. The embodiment of the method for determining an object to be called of the present disclosure will be described below with reference to Fig. 3.

Fig. 3 shows a schematic flow chart of a method for determining an object to be called according to some embodiments of the present disclosure. As shown in Fig. 3, the determining method of this embodiment includes steps S302 to S304.

In step S302, whether an intention of the user to continue to consume the multimedia content exists is determined based on the multimedia content.

Continuing to consume the multimedia content refers to continuing to perform an operation related to the multimedia content after the multimedia content is browsed, for example, searching for the information related to the multimedia content, continuing to ask a question to the agent about the multimedia content, and the like.

In some embodiments, it may be determined whether the user is intended to continue to consume the multimedia content by information quantity and complexity of the multimedia content as well as the information associated with the multimedia content. The information quantity is determined, for example, by the attribute information of the multimedia content, such as duration and text quantity involved, or may be identified according to a model for determining the information quantity. The complexity is determined, for example, by the number of subjects and subject type(s) involved in the multimedia content. The number of subjects is in a positive correlation relationship with the complexity, that is, the more the number of subjects is, the more complex the multimedia content will be. Some specific subject types have a higher complexity, for example, the complexity involving subjects related to mathematics, physics and the like is usually higher than the complexity of a daily life subject. The information associated with the multimedia content may be determined by searching, and the intension to continue to consume may be determined based on the information quantity and complexity of the searched information. Generally, the user is more likely to be intended to continue to consume the multimedia content with a large number of subjects, a high complexity and plenty of associated information.

In some embodiments, it is also possible to count the data of continuing to consume the multimedia content of some subjects or types in advance, and determine whether the user is intended to continue to consume the current multimedia content on such basis. For example, if the user in an application has many behaviors of continuing to consume the multimedia content of a certain subject or type (for example, the times or proportion of continuing with consumption exceeds a specified threshold), it is also possible to determine that the user is intended to continue to consume the multimedia content that is currently browsed in response to that the multimedia content that is currently browsed belongs to the subject or type.

In step S304, in response to an existence of the intention of the user to continue to consume, an agent is selected from one or more candidate agents as the object to be called according to a matching result between understanding information of the multimedia content and the one or more candidate agents.

If the user is intended to continue with consumption, it means that the user might need to learn more about the multimedia content that is currently browsed or further learn about the information related to the current multimedia content. In this case, the agent may be called. Therefore, in addition to understanding the current multimedia content and sending a message, the agent may also receive further input from the user and make a response to the further input.

One or more candidate agents may include different types of agents, for example, an agent created by a current user, an agent created by other users, a default agent provided by an application, and for another example, an emotional agent, a tool agent, and a knowledge agent. It is possible to further select a matching agent, or directly select a default agent according to the multimedia content.

In some embodiments, it is also possible to include step S306: selecting, in response to an absence of the intention of the user to continue to consume, a sub-application from one or more candidate sub-applications as the object to be called. That is, when the user is not intended to continue with consumption, it is possible to call an applet related to the multimedia content to provide the user with more information related to the multimedia content in another manner. For example, for a video narrating an extreme weather in a certain place, it is possible to call a weather applet for the user, so that the user may rapidly view whether the local weather is abnormal.

In the above-described embodiments, it is possible to call an object according to whether the user is intended to continue with consumption, so that it is possible to call an object that is more matched with the current multimedia content, so as to improve the interaction experience of the user.

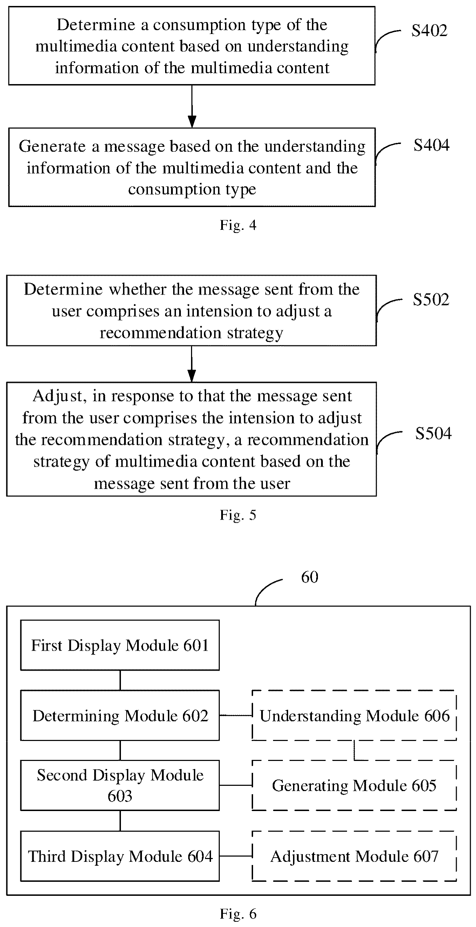

After the multimedia content is browsed, the user may further consume the multimedia content. The consumption types of the multimedia content may include in-depth consumption, extended consumption and auxiliary understanding consumption. In-depth consumption refers to recommending other functions based on the understanding of the current multimedia content. Extended consumption refers to recommending other relevant information based on the understanding of the current video. Auxiliary understanding consumption refers to assisting the user to understand the multimedia content with a large information quantity. According to a consumption type, a corresponding message may be further generated. The embodiment of a message generation method of the present disclosure will be described below with reference to Fig. 4.

Fig. 4 shows a schematic flow chart of a message generation method according to some embodiments of the present disclosure. As shown in Fig. 4, the message generation method of this embodiment includes steps S402 to S404.

In step S402, a consumption type of the multimedia content is determined based on understanding information of the multimedia content, wherein the consumption type comprises at least one of in-depth consumption, extended consumption or auxiliary understanding consumption.

According to the understanding information of the multimedia content, it is possible to determine a plurality of types of objects associated with the multimedia content, so as to determine a consumption type according to these associated objects. Each associated object may correspond to a consumption type, for example, the associated function corresponds to the in-depth consumption, the associated information corresponds to the extended consumption, and the associated historical browsing record corresponds to the auxiliary understanding consumption. In some embodiments, it is necessary to determine whether the multimedia content may provide a certain consumption type, for example, whether the multimedia content possesses a certain type of associated object, with a consumption type that can be provided according to the multimedia content as a consumption type of the multimedia content. Further, for the case where the multimedia content may provide a plurality of consumption types, it is possible to determine an object with the highest adaptability to the multimedia content from a plurality of associated object types according to an association degree between an associated object and the multimedia content or an information quantity of the associated object, so as to determine a consumption type that is most suitable for the multimedia content.

In some embodiments, one or more associated objects of the multimedia content are determined based on the understanding information of the multimedia content, wherein the one or more associated objects comprise at least one of an associated function in an application, searched associated information, or an associated historical browsing record authorized by the user; a target associated object is determined from the one or more associated objects according to a correlation degree between each type of the associated objects and the understanding information; and a consumption type corresponding to the target associated object is determined, wherein the associated function corresponds to the in-depth consumption, the associated information corresponds to the extended consumption, and the associated historical browsing record corresponds to the auxiliary understanding consumption. The association degree may be determined according to a machine learning model for determining an association degree, or determined by determining a similarity between the associated object and the multimedia content. By selecting a certain type of associated object according to the association degree so as to determine a corresponding consumption type, it is possible to allow that the determined consumption type is more matched with the multimedia content.

In step S404, a message is generated based on the understanding information of the multimedia content and the consumption type.

In the case where the consumption type is the in-depth consumption, a message for recommending a associated function is generated based on the understanding information of the multimedia content. The associated functions are, for example, tools, sub-applications, other agents and the like. Therefore, the user may choose to continue to communicate with the current agent, or use other functions by the recommendation from the current agent. In this way, it is possible to allow the user to use the functions related to the current multimedia content in the application, thereby improving the utilization rate of the functions in the application.

In the case where the consumption type is the extended consumption, the message for describing the associated information is generated based on the understanding information of the multimedia content. Therefore, the user may rapidly learn about more multimedia related information, thereby improving the information obtaining efficiency of the user. For example, if the played multimedia content is a video introducing a television drama, the message generated by the agent may include other film and television works recently performed by a main actor of the television drama.

In the case where the consumption type is the auxiliary understanding consumption, key information of the multimedia content, for example, a summary of the multimedia content, may be generated. In some embodiments, a message may also be generated in combination with the historically browsed multimedia content, for example, generating a summary of or a comparison between the current multimedia content and the historically browsed multimedia content, so as to help the user to rapidly obtain the main information in the multimedia content.

In some embodiments, summary information of multimedia content in the historical browsing record and the displayed multimedia content is generated based on similar information between understanding information of the multimedia content in the historical browsing record and the understanding information of the displayed multimedia content; and the message to be sent by the agent is generated based on the summary information. For example, if a video of making a certain dish is currently browsed, other videos of making the same dish that are browsed by the user can be summarized together, so as to extract key elements of making the food.

In some embodiments, comparison information of the multimedia content in the historical browsing record and the displayed multimedia content is generated based on difference information between understanding information of the multimedia content in the historical browsing record and the understanding information of the displayed multimedia content; and the message to be sent by the agent is generated based on the comparison information. For example, when a video of making a disk with abundant content is currently browsed, it is possible to compare this video with other videos of making the same dish that are browsed by the user, so as to highlight special skills used in the current video.

In the above-described embodiments, different messages are generated based on a consumption type of the multimedia content, so that it is possible to allow the generated message to have a high matching degree with the multimedia content, thereby improving the browsing experience of the multimedia content by the user.

As mentioned in the aforementioned embodiments, the user may initiatively send a message to the agent during the process of browsing the multimedia content. Besides an instruction related to the understanding of the multimedia content, the user may also send other types of information to the agent. For example, the user may feedback the content recommended in a recommendation stream through the agent. The embodiment of the interaction method for adjusting a recommendation policy of the present disclosure will be described below with reference to Fig. 5.

Fig. 5 shows a schematic flow chart of an interaction method according to other embodiments of the present disclosure. As shown in Fig. 5, the interaction method of this embodiment includes steps S502 to S504.

In step S502, whether the message sent from the user comprises an intension to adjust a recommendation strategy is determined. This step may be obtained through semantic analysis, for example, obtained by processing the message sent from the user through a machine learning model with a semantic analysis function.

In step S504, in response to that the message sent from the user comprises the intension to adjust the recommendation strategy, a recommendation strategy of multimedia content is adjusted based on the message sent from the user.

In the case where the message sent from the user includes an intension to adjust the recommendation strategy, it is possible to directly obtain an adjustment intension of the user from the message itself, for example, "I want to watch more pet videos"; and it is also possible to obtain an adjustment intension of the user by combining the currently played multimedia content, for example, in "I like watching this kind of video, so push me more", "this kind" needs to be combined with an analysis result of the currently played multimedia content to determine what kind of video the user likes to watch.

In some embodiments, in response to that the message sent from the user comprises the intension to adjust the recommendation strategy, it is determined whether the message sent from the user comprises a reference to the displayed multimedia content; and in response to the message sent from the user comprising the reference to the displayed multimedia content, the recommendation strategy of multimedia content is adjusted based on the message sent from the user and understanding information of the displayed multimedia content. The reference to the displayed multimedia content is, for example, various pronouns, for example, "this" and "such", so that it is possible to determine that the feedback of the user is made based on the currently displayed multimedia content. In this embodiment, an adjustment benchmark may be determined based on the understanding information, for example, a type or label of the currently displayed multimedia content, and an adjustment direction may be then determined based on the message sent from the user. For example, "sending more such videos" means increasing the multimedia content with a type or label of the currently displayed multimedia content.

By way of the above-described embodiments, the user may adjust a recommendation strategy of the recommendation stream by conversation with the agent, so that the user may feedback the recommendation requirements more flexibly and meticulously, thereby improving the user feedback efficiency and the user experience.

The method embodiments of the present disclosure have been exemplarily introduced above. The device for implementing the method of the above-described embodiments will be further described below.

Fig. 6 shows a schematic structural view of an interaction device according to some embodiments of the present disclosure. As shown in Fig. 6, the interaction device 60 of this embodiment comprises: a first display module 601 configured for displaying multimedia content in a playing interface; a determining module 602 configured for determining an object to be called based on the multimedia content; a second display module 603 configured for displaying, in response to the object to be called being an agent, a message sent from the agent through a message control in the playing interface, wherein the message is obtained by understanding the multimedia content; a third display module 604 configured for displaying a conversation interface between the user and the agent in response to a trigger operation of the user on the message control.

In some embodiments, the determining module 602 is further configured for determining, based on the multimedia content, whether an intention of the user to continue to consume the multimedia content exists; and selecting, in response to an existence of the intention of the user to continue to consume, an agent from one or more candidate agents as the object to be called according to a matching result between understanding information of the multimedia content and the one or more candidate agents.

In some embodiments, the determining module 602 is further configured for selecting, in response to an absence of the intention of the user to continue to consume, a sub-application from one or more candidate sub-applications as the object to be called.

In some embodiments, the interaction device 60 further includes a generating module 605 configured for determining a consumption type of the multimedia content based on understanding information of the multimedia content, wherein the consumption type comprises at least one of in-depth consumption, extended consumption or auxiliary understanding consumption; and generating the message based on the understanding information of the multimedia content and the consumption type.

In some embodiments, the generating module 605 is further configured for determining one or more associated objects of the multimedia content based on the understanding information of the multimedia content, wherein the one or more associated objects comprise at least one of an associated function in an application, searched associated information, or an associated historical browsing record authorized by the user; determining a target associated object from the one or more associated objects according to a correlation degree between each type of the associated objects and the understanding information; and determining a consumption type corresponding to the target associated object, wherein the associated function corresponds to the in-depth consumption, the associated information corresponds to the extended consumption, and the associated historical browsing record corresponds to the auxiliary understanding consumption.

In some embodiments, the consumption type is the in-depth consumption, and the generating module 605 is further configured for generating the message for recommending the associated function based on the understanding information of the multimedia content.

In some embodiments, the consumption type is the extended consumption, and the generating module 605 is further configured for generating the message for describing the associated information based on the understanding information of the multimedia content.

In some embodiments, the consumption type is the auxiliary understanding consumption, and the generating module 605 is further configured for generating summary information of multimedia content in the historical browsing record and the displayed multimedia content based on similar information between understanding information of the multimedia content in the historical browsing record and the understanding information of the displayed multimedia content; and generating the message to be sent by the agent based on the summary information.

In some embodiments, the consumption type is the auxiliary understanding consumption, and the generating module 605 is further configured for generating comparison information of the multimedia content in the historical browsing record and the displayed multimedia content based on difference information between understanding information of the multimedia content in the historical browsing record and the understanding information of the displayed multimedia content; and generating the message to be sent by the agent based on the comparison information.

In some embodiments, the interaction device 60 further includes an understanding module 606.

In some embodiments, the understanding module 606 is configured for performing understanding on the multimedia content in response to displaying the multimedia content.

In some embodiments, the playing interface further includes an input control, and the understanding module 606 is configured for obtaining a message sent from the user to the agent through the input control; and performing understanding on the multimedia content based on the instruction information in the message sent from the user.

In some embodiments, the second display module 603 is further configured for displaying the message sent from the robot to the user through a dialog box, an icon or a floating layer.

In some embodiments, the multimedia content is the content in a recommendation stream of multimedia content, and the interaction device 60 further includes an adjustment module 607 configured for determining whether the message sent from the user comprises an intension to adjust a recommendation strategy; and adjusting, in response to that the message sent from the user comprises the intension to adjust the recommendation strategy, a recommendation strategy of multimedia content based on the message sent from the user.

In some embodiments, the adjustment module 607 is further configured for determining, in response to that the message sent from the user comprises the intension to adjust the recommendation strategy, whether the message sent from the user comprises a reference to the displayed multimedia content; and adjusting, in response to the message sent from the user comprising the reference to the displayed multimedia content, the recommendation strategy of multimedia content based on the message sent from the user and understanding information of the displayed multimedia content.

It should be noted that, the above-described units are only logical modules divided according to the specific functions realized by the same, but not intended to limit specific implementations. For example, it is possible to be implemented in the form of software, hardware, or a combination of software and hardware. In actual implementation, each of the above-described units may be implemented as an independent physical entity, or may also be implemented by a single entity (for example, a processor (CPU or DSP, and the like), an integrated circuit, etc.). In addition, the above-described respective units are shown with dotted lines in the accompanying drawings to indicate that these units may not actually exist, and the operations/functions realized by them may be implemented by the processing circuit itself.

In addition, although not shown, the device may also include a memory, which may store various information generated by the device and various units included in the device during operation, programs and data for operation, data to be sent from the communication unit, and the like. The memory may be a volatile memory and/or a non-volatile memory. For example, the memory may include, but is not limited to, a random access memory (RAM), a dynamic random access memory (DRAM), a static random access memory (SRAM), a read only memory (ROM), and a flash memory. Of course, the memory may also be located outside the device. Alternatively, although not shown, the device may also include a communication unit, which may be used to communicate with other devices. In an example, the communication unit may be implemented in an appropriate manner known in the art, for example, including communication components such as antenna arrays and/or radio frequency links, various types of interfaces, communication units, and the like, which will not be described in detail here. Detailed description will not be repeated here. In addition, the device may also include other components not shown, such as a radio frequency link, a baseband processing unit, a network interface, a processor, a controller, and the like, which will not be described in detail here. Detailed description will not be repeated here.

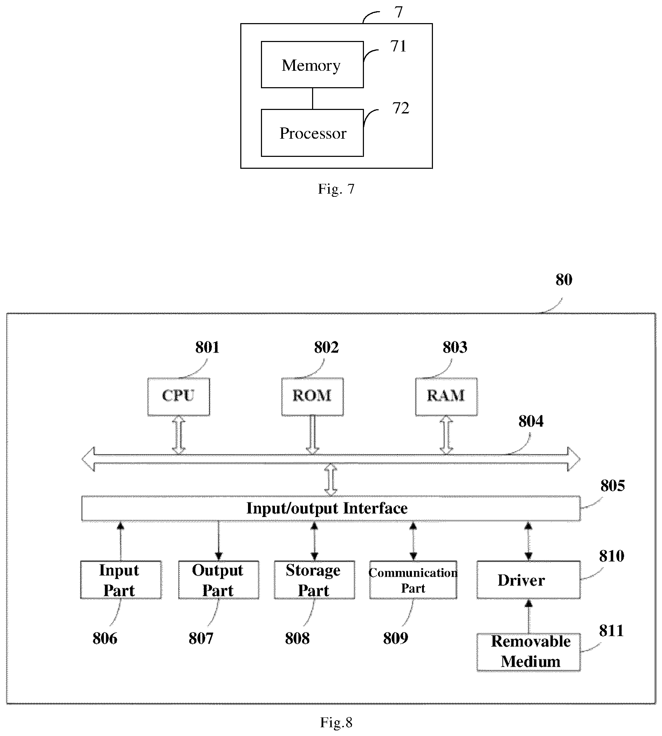

In some embodiments of the present disclosure, an electronic device is also provided. Fig. 7 shows a schematic structural view of an electronic device according to some embodiments of the present disclosure. For example, in some embodiments, the electronic device 7 which may be various types of devices, for example may include, but is not limited to mobile terminals such as mobile phones, notebook computers, digital broadcast receivers, PDAs (personal digital assistants), PADs (pad computers), PMP (Portable Multimedia Player) and in-vehicle terminals (for example, in-vehicle navigation terminals); and fixed terminals such as digital TVs, desktop computers and the like. For example, the electronic device 7 may include a display panel for displaying data and/or execution results used in the solution according to the present disclosure. For example, the display panel may have various shapes, such as a rectangular panel, an oval panel, or a polygonal panel. In addition, the display panel may be not only a flat panel, but also a curved panel, or even a spherical panel.

As shown in Fig. 7, the electronic device 7 of this embodiment includes: a memory 71, and a processor 72 coupled to the memory 71. It should be noted that the components of the electronic device 7 shown in Fig. 7 are only exemplary, but not restrictive. According to actual application requirements, the electronic device 7 may also have other components. The processor 72 may control other components in the electronic device 7 to perform desired functions.

In some embodiments, the memory 71 is configured to store one or more computer-readable instructions. When the processor 72 is configured to run computer-readable instructions, the computer-readable instructions are executed by the processor 72 to implement the method according to any of the above-described embodiments. For the specific implementation of each step of the method and the related content as explained, it is possible to refer to the above-described embodiments, which will not be described in detail here.

For example, the processor 72 and the memory 71 may directly or indirectly communicate with each other. For example, the processor 72 and the memory 71 may communicate through a network. The network may include a wireless network, a wired network, and/or any combination of a wireless network and a wired network. The processor 72 and the memory 71 may also communicate with each other through a system bus, which is not limited in the present disclosure.

For example, the processor 72 may be embodied as various appropriate processors, processing devices and the like, such as a central processing unit (CPU), a graphics processing unit (GPU) and a network processor (NP); and may also be a digital signal processor (DSP), an application specific integrated circuit (ASIC), a field programmable gate array (FPGA) or other programmable logic devices, a discrete gate or transistor logic device, and a discrete hardware component. The central processing unit (CPU) may be X86 or ARM architecture and the like. For example, the memory 71 may include any combination of various forms of computer-readable storage media, such as a volatile memory and/or a non-volatile memory. The memory 71 may include, for example, a system memory. The memory 71 may include, for example, a system memory. The system memory, for example, stores an operating system, an application program, a boot loader, a database, and other programs. Various application programs and various data may also be stored in the storage medium.

In addition, according to some embodiments of the present disclosure, in the case where various operations/processes according to the present disclosure are implemented by software and/or firmware, it is possible to install a program constituting the software to a computer system with a dedicated hardware structure, for example, the computer system 80 shown in Fig. 8, from a storage medium or a network. When the computer system is installed with various programs, it is possible to perform various functions, including the functions described previously. Fig. 8 shows a schematic structural view of a computer system according to some embodiments of the present disclosure.

In Fig. 8, a central processing unit (CPU) 801 executes various processes according to a program stored in a read only memory (ROM) 802 or a program loaded from a storage section 808 to a random access memory (RAM) 803. In the RAM 803, data required when the CPU 801 executes various processes and the like is also stored as necessary. The central processing unit which is only exemplary, may also be other types of processors, such as the processors described above. The ROM 802, the RAM 803, and the storage section 808 may be various forms of computer-readable storage media, as described below. It should be noted that although the ROM 802, the RAM 803, and the storage device 808 are shown in Fig. 8 respectively, one or more of them may be combined or located in the same or different memories or storage modules.

The CPU 801, the ROM 802, and the RAM 803 are connected to each other via a bus 804. The input/output interface 805 is also connected to the bus 804.

The following components are connected to the I/O interface 805: an input section 806, such as a touch screen, a touch panel, a keyboard, a mouse, an image sensor, a microphone, an accelerometer or a gyroscope; an output section 807, including a display, such as a cathode ray tube (CRT), a liquid crystal display (LCD), a speaker, or a vibrator; a storage section 808, including a hard disk, or a tape; and a communication section 809, including a network interface card such as a LAN card and a modem. The communication section 809 allows execution of communication processing via a network such as Internet. It is easily conceivable that, although the devices or modules in the computer system 80 shown in Fig. 8 communicate through the bus 804, it is possible to also communicate through a network or other means, wherein the network may include a wireless network, a wired network, and/or any combination of a wireless network and a wired network.

The driver 810 is also connected to the input/output interface 805 as required. A removable medium 811 such as a magnetic disk, an optical disk, a magneto-optical disk and a semiconductor memory is mounted on the drive 810 as necessary, so that the computer program read out therefrom is installed into the storage section 808 as necessary.

In a case of implementing the above-described series of processes by software, the program constituting a software may be installed from a network such as Internet or a storage medium such as a removable medium 811.

According to the embodiment of the present disclosure, the process described above with reference to the flowchart may be implemented as a computer software program. For example, the embodiment of the present disclosure includes a computer program product including a computer program carried on a computer-readable medium, wherein the computer program contains program codes for performing the method shown in the flowchart. In such embodiment, the computer program may be downloaded and installed from the network through the communication device 809, installed from the storage device 808, or installed from the ROM 802. When the computer program is executed by the CPU 801, the above-described functions defined in the method of the embodiment of the present disclosure are executed.

It should be noted that in the context of the present disclosure, a computer-readable medium may be a tangible medium, which may contain or store a program for use by the instruction execution system, apparatus, or device or use in combination with the instruction execution system, apparatus, or device. The computer-readable medium may be a computer-readable signal medium, a computer-readable storage medium or any combination thereof. The computer-readable storage medium may be, for example, but is not limited to: a system, a device, or an apparatus of electrical, magnetic, optical, electromagnetic, infrared, or semiconductor, or a combination thereof. More specific examples of the computer-readable storage medium may include, but is not limited to: an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, a computer-readable storage medium may be any tangible medium that contains or stores a program which may be used by an instruction execution system, apparatus, or device or used in combination therewith. In the present disclosure, the computer-readable signal medium may include a data signal propagated in a baseband or as a part of a carrier wave, wherein a computer-readable program code is carried. Such propagated data signal may take many forms, including but not limited to an electromagnetic signal, an optical signal, or any suitable combination thereof. The computer-readable signal medium may also be any computer-readable medium other than the computer-readable storage medium. The computer-readable signal medium may send, propagate, or transmit a program for use by an instruction execution system, apparatus, or device or in combination with therewith. The program code contained on the computer-readable medium may be transmitted by any suitable medium, including but not limited to: a wire, an optical cable, radio frequency (RF), and the like, or any suitable combination thereof.

The above-described computer-readable medium may be included in the above-described electronic device; or may also exist alone without being assembled into the electronic device.

In some embodiments, a computer program is also provided. The computer program includes instructions, which, when executed by a processor, cause the processor to execute the method of any of the above-described embodiments. For example, the instructions may be embodied as a computer program code.

In an embodiment of the present disclosure, the computer program code for performing the operations of the present disclosure may be written in one or more programming languages or a combination thereof. The above-described programming languages include but are not limited to object-oriented programming languages, such as Java, Smalltalk, and C++, and also include conventional procedural programming languages, such as "C" language or similar programming languages. The program code may be executed entirely on the user's computer, partly on the user's computer, executed as an independent software package, partly on the user's computer and partly executed on a remote computer, or entirely executed on the remote computer or server. In a case of a remote computer, the remote computer may be connected to the user's computer through any kind of network (including a local area network (LAN) or a wide area network (WAN)), or may be connected to an external computer (for example, connected through Internet using an Internet service provider).

The flowcharts and block views in the accompanying drawings illustrate the possibly implemented architectures, functions, and operations of the system, method, and computer program product according to various embodiments of the present disclosure. In this regard, each block in the flowchart or block view may represent a module, a program segment, or a part of code, wherein the module, the program segment, or the part of code contains one or more executable instructions for realizing a specified logic function. It should also be noted that, in some alternative implementations, the functions marked in the block may also occur in a different order from the order marked in the accompanying drawings. For example, two blocks shown in succession which may actually be executed substantially in parallel, may sometimes also be executed in a reverse order, depending on the functions involved. It is also to be noted that each block in the block view and/or flowchart, and a combination of the blocks in the block view and/or flowchart, may be implemented by a dedicated hardware-based system that performs the specified functions or operations, or may be implemented by a combination of dedicated hardware and computer instructions.

The modules, components, or units involved in the described embodiments of the present disclosure may be implemented in software or hardware. Wherein, the names of the modules, components or units do not constitute a limitation on the modules, components or units themselves under certain circumstances.

The functions described hereinabove may be performed at least in part by one or more hardware logic components. For example, without limitation, the exemplary hardware logic components that may be used include: a Field Programmable Gate Array (FPGA), an Application Specific Integrated Circuit (ASIC), an Application Specific Standard Product (ASSP), a System on Chip (SOC), a Complex Programmable Logical device (CPLD) and the like.

The above description is only an explanation of some embodiments of the present disclosure and the applied technical principles. Those skilled in the art should understand that the scope of disclosure involved in this disclosure is not limited to the technical solutions formed by the specific combination of the above technical features, and at the same time should also cover other technical solutions formed by arbitrarily combining the above-described technical features or equivalent features without departing from the above disclosed concept. For example, the above-described features and the technical features disclosed in the present disclosure (but not limited thereto) having similar functions are replaced with each other to form a technical solution.

In the description provided herein, many specific details are elaborated. However, it is understood that the embodiments of the present invention may be implemented without these specific details. In other cases, in order not to obscure the understanding of the description, the well-known methods, structures and technologies are not demonstrated in detail.

In addition, although the operations are depicted in a specific order, this should not be understood as requiring these operations to be performed in the specific order shown or performed in a sequential order. Under certain circumstances, multitasking and parallel processing might be advantageous. Likewise, although several specific implementation details are contained in the above discussion, these should not be construed as limiting the scope of the present disclosure. Certain features that are described in the context of individual embodiments may also be implemented in combination in a single embodiment. On the contrary, various features described in the context of a single embodiment may also be implemented in multiple embodiments individually or in any suitable sub-combination.

Although some specific embodiments of the present disclosure have been described in detail by way of examples, those skilled in the art should understand that the above examples are only for an illustrative purpose, rather than limiting the scope of the present disclosure. Those skilled in the art should appreciate that modifications to the above embodiments may be made without departing from the scope and spirit of the present disclosure. The scope of the present disclosure is defined by the appended claims.

## Claims

1. An interaction method, comprising:
displaying multimedia content in a playing interface;
determining an object to be called based on the multimedia content;
displaying, in response to the object to be called being an agent, a message sent from the agent through a message control in the playing interface, wherein the message is obtained by understanding the multimedia content; and
displaying a conversation interface between the user and the agent in response to a trigger operation of the user on the message control.

2. The interaction method according to claim 1, wherein the determining the object to be called based on the multimedia content comprises:
determining, based on the multimedia content, whether an intention of the user to continue to consume the multimedia content exists; and
selecting, in response to an existence of the intention of the user to continue to consume, an agent from one or more candidate agents as the object to be called according to a matching result between understanding information of the multimedia content and the one or more candidate agents.

3. The interaction method according to claim 2, further comprising:
selecting, in response to an absence of the intention of the user to continue to consume, a sub-application from one or more candidate sub-applications as the object to be called.

4. The interaction method according to any of claims 1 to 3, further comprising:
determining a consumption type of the multimedia content based on understanding information of the multimedia content, wherein the consumption type comprises at least one of in-depth consumption, extended consumption or auxiliary understanding consumption; and
generating the message based on the understanding information of the multimedia content and the consumption type.

5. The interaction method according to claim 4, wherein the determining the consumption type of the multimedia content based on the understanding information of the multimedia content comprises:
determining one or more associated objects of the multimedia content based on the understanding information of the multimedia content, wherein the one or more associated objects comprise at least one of an associated function in an application, searched associated information, or an associated historical browsing record authorized by the user;
determining a target associated object from the one or more associated objects according to a correlation degree between each type of the associated objects and the understanding information; and
determining a consumption type corresponding to the target associated object, wherein the associated function corresponds to the in-depth consumption, the associated information corresponds to the extended consumption, and the associated historical browsing record corresponds to the auxiliary understanding consumption.

6. The interaction method according to claim 5, wherein the consumption type is the in-depth consumption, and the generating the message based on the understanding information of the multimedia content and the consumption type comprises:
generating the message for recommending the associated function based on the understanding information of the multimedia content.

7. The interaction method according to claim 5 or 6, wherein the consumption type is the extended consumption, and the generating the message based on the understanding information of the multimedia content and the consumption type comprises:
generating the message for describing the associated information based on the understanding information of the multimedia content.

8. The interaction method according to any of claims 5 to 7, wherein the consumption type is the auxiliary understanding consumption, and the generating the message based on the understanding information of the multimedia content and the consumption type comprises:
generating summary information of multimedia content in the historical browsing record and the displayed multimedia content based on similar information between understanding information of the multimedia content in the historical browsing record and the understanding information of the displayed multimedia content; and
generating the message to be sent by the agent based on the summary information.

9. The interaction method according to any of claims 5 to 8, wherein the consumption type is the auxiliary understanding consumption, and the generating the message based on the understanding information of the multimedia content and the consumption type comprises:
generating comparison information of the multimedia content in the historical browsing record and the displayed multimedia content based on difference information between understanding information of the multimedia content in the historical browsing record and the understanding information of the displayed multimedia content; and
generating the message to be sent by the agent based on the comparison information.

10. The interaction method according to any of claims 1 to 9, further comprising:
performing understanding on the multimedia content in response to displaying the multimedia content.

11. The interaction method according to any of claims 1 to 10, wherein the playing interface further comprises an input control, and the interaction method further comprises:
obtaining a message sent from the user to the agent through the input control; and
performing understanding on the multimedia content based on the instruction information in the message sent from the user.

12. The interaction method according to claim 10 or 11, wherein displaying the message sent from the agent through the message control comprises:
displaying the message sent from the robot to the user through a dialog box, an icon or a floating layer.

13. The interaction method according to claim 11 or 12, wherein the multimedia content is content in a recommendation stream of multimedia content, and the interaction method further comprises:
determining whether the message sent from the user comprises an intension to adjust a recommendation strategy; and
adjusting, in response to that the message sent from the user comprises the intension to adjust the recommendation strategy, a recommendation strategy of multimedia content based on the message sent from the user.

14. The interaction method according to claim 13, wherein the adjusting, in response to that the message sent from the user comprises the intension to adjust the recommendation strategy, the recommendation strategy of multimedia content based on the message sent from the user comprises:
determining, in response to that the message sent from the user comprises the intension to adjust the recommendation strategy, whether the message sent from the user comprises a reference to the displayed multimedia content; and
adjusting, in response to the message sent from the user comprising the reference to the displayed multimedia content, the recommendation strategy of multimedia content based on the message sent from the user and understanding information of the displayed multimedia content.

15. An interaction device, comprising:
a first display module configured for displaying multimedia content in a playing interface;
a determining module configured for determining an object to be called based on the multimedia content;
a second display module configured for displaying, in response to the object to be called being an agent, a message sent from the agent through a message control in the playing interface, wherein the message is obtained by understanding the multimedia content; and
a third display module configured for displaying a conversation interface between the user and the agent in response to a trigger operation of the user on the message control.

16. An electronic device, comprising:
a memory; and
a processor coupled to the memory, wherein the processor is configured to, based on instructions stored in the memory, perform the interaction method according to any of claims 1 to 14.

17. A computer readable storage medium, having a computer program stored thereon that, when executed by a processor, implements the interaction method according to any of claims 1 to 14.

18. A computer program product that when run on a computer, causes the computer to implement the interaction method according to any of claims 1 to 14.

19. A computer program, including:
instructions that, when executed by a processor, cause the processor to perform the interaction method according to any of claims 1 to 14.
